Europäisches Patentamt

European Patent Office

Office européen des brevets

(19)

(11) Publication number: 0 401 634
A2

# (12) EUROPEAN PATENT APPLICATION

(21) Application number: 90110048.7

(22) Date of filing: 28.05.90

(51) Int. Cl.5: F16K 3/34, F16K 3/02

(30) Priority: 08.06.89 IT 2082489

(43) Date of publication of application:
12.12.90 Bulletin 90/50

(84) Designated Contracting States:
AT BE DE ES FR GB NL

(71) Applicant: MS MACCHINE E SISTEMI S.r.l.
Via Matteotti 11
I-20021 Bollate(IT)

(72) Inventor: Pasquettin, Pierangelo
Via Lamarmora 4
I-22070 Bregnano (Como)(IT)

(74) Representative: Modiano, Guido et al
MODIANO, JOSIF, PISANTY & STAUB
Modiano & Associati Via Meravigli, 16
I-20123 Milano(IT)

(54) Metering valve for the metered delivery of color pigments particularly in apparatuses for mixing coloring substances.

(57) The present invention relates to a metering valve (1) for the metered delivery of color pigments particularly in apparatuses for mixing coloring substances. The valve (1) comprises a color pigment feed duct (2) which defines a delivery port (3) controlled by a laminar shutter (10) which can move transversely with respect to the port (3) itself. The port (3) is arranged in a plane which is inclined with respect to a vertical plane and has, on the plane of contact with the laminar shutter (10), a configuration which tapers in the direction of translation of the laminar shutter (10) toward the end of the port (3) which is last-closed by the laminar shutter (10).

Fig.2

Xerox Copy Centre

# METERING VALVE FOR THE METERED DELIVERY OF COLOR PIGMENTS PARTICULARLY IN APPARATUSES FOR MIXING COLORING SUBSTANCES

The present invention relates to a metering valve for the metered delivery of color pigments particularly in apparatuses for mixing coloring substances.

As known, apparatuses for mixing coloring substances are constituted by devices which must provide a perfectly metered delivery of amounts of color pigments so as to obtain the required color mix.

As is obvious, in order to have constancy in the color, as required in the production of inks, paints, dyes and the like, it is necessary that the various amounts be metered with extreme precision and constancy in the course of time.

Valves arranged on the various color feed ducts are currently used to perform this metering; said valves are operated for preset times and with preset openings, so as to obtain the delivery of the required amount of color pigment.

This solution is not free from disadvantages, since there are various problems which have not found an adequate solution; in fact, considerable difficulties are encountered in metering with extreme precision the amount of flow, and most of all problems are encountered due to the dripping of the amounts of color pigment which, once closure has been performed, can occur below the closing shutter.

Dripping is an extremely negative phenomenon, since besides altering the exact amounts it can cause undesirable color "contaminations", i.e. the introduction of colors which are not required.

Known valves furthermore have actuation means which are considerably complicated and require relatively long actuation times.

The aim of the invention is to provide a metering valve for the metered delivery of color pigments particularly in apparatuses for mixing coloring substances which allows to perform an extremely precise closure of the color feed duct, preventing in the most absolute manner the occurrence of pigment dripping at the closing shutter.

Within the scope of the above described aim, a particular object of the invention is to provide a metering valve which allows to choke the delivery flow with a proportional variation rule which allows to obtain a more precise metering.

Another object of the present invention is to provide a metering valve which allows to obtain, if required, even the dosage of color pigments in drops.

Not least object of the present invention is to provide a metering valve which, by virtue of its peculiar constructive characteristics, is capable of giving the greatest assurances of reliability and safety in use.

This aim, these objects and others which will become apparent hereinafter are achieved by a metering valve for the metered delivery of color pigments particularly in apparatuses for mixing coloring substances, according to the invention, characterized in that it comprises a color pigment feed duct which defines a delivery port controlled by a laminar shutter which is transversely movable with respect to said port, said port having, on the plane of contact with said laminar shutter, a configuration which tapers, in the direction of translation of said laminar shutter, toward the end of said port which is last-closed by said laminar shutter.

Further characteristics and advantages will become apparent from the description of a preferred but not exclusive embodiment of a metering valve for the metered delivery of color pigments particularly in apparatuses for mixing coloring substances, illustrated only by way of non-limitative example in the accompanying drawings, wherein:

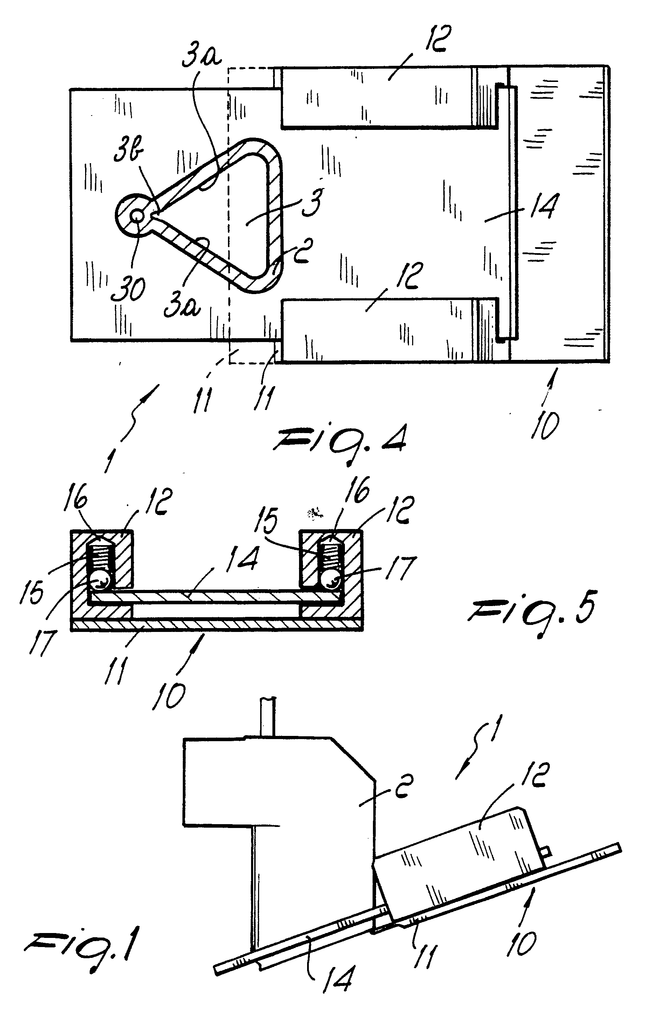

figure 1 is a schematic side elevation view of the metering valve according to the invention;

figure 2 is a sectional view of the metering valve taken along a vertical plane, with the laminar shutter in fully open position;

figure 3 is a sectional view of the metering valve, taken along a vertical plane, with the laminar shutter in fully closed position;

figure 4 is a sectional view taken along the line IV-IV of figure 2 to point out the configuration of the port;

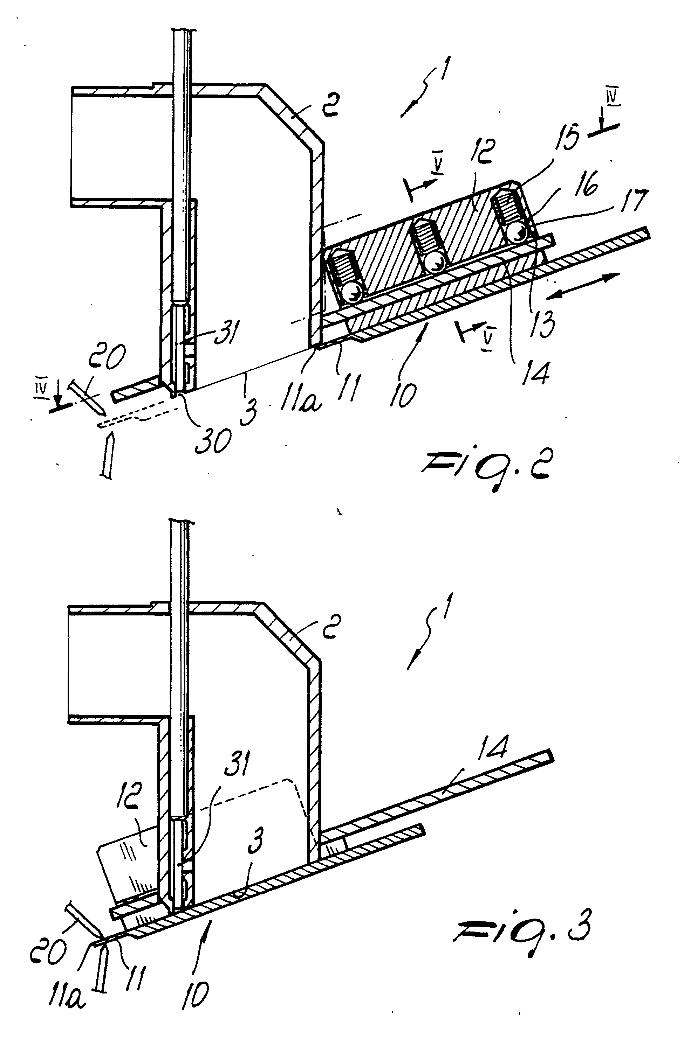

figure 5 is a sectional view taken along the line V-V of figure 2.

With reference to the above figures, the metering valve for the metered delivery of color pigments, particularly in apparatuses for mixing coloring substances, according to the invention, which is generally indicated by the reference numeral 1, comprises a color pigment feed duct 2 which is connected to a containment tank in a per se known manner and ends at a delivery port 3.

The delivery port 3 is controlled by a laminar shutter, generally indicated by the reference numeral 10, which can move transversely with respect to said port.

More in detail, the laminar shutter 10 is provided with a closure lamina 11 which is associated with guiding shoulders 12 provided with guiding grooves 13 in which a fixed guiding abutment 14, associated with the duct 2, slidably engages.

Elastic-thrust presser means are provided in order to elastically retain the lamina 11 in contact with the port 3 and are advantageously constituted by compression springs 15 which are accommodated in recesses 16 defined on the shoulders 12 and act on balls 17 which engage by contact the fixed guiding abutment 14.

In this manner, a constant elastic thrust is exerted and keeps the lamina 11 against the port 3, thus providing a sealing closure.

The guiding shutter 10 is actuated in its translatory motion transversely to the port 3 in a per se known manner through means which control the choking of the port 3 according to the amount of color pigment to be delivered.

A very important peculiarity of the invention is constituted by the fact that the port 3 has, on the plane of contact with the lamina 11, a configuration which tapers in the direction of translation of the laminar shutter 10 toward the end of said port which is last-closed by said laminar shutter.

Preferably, the port 3 has a triangular configuration with the two oblique sides, indicated by the reference numeral 3a, which converge toward a vertex 3b, located toward the end of said port which is last-closed by the laminar shutter.

The triangular configuration with converging sides is considerably important with regard to dripping of pigment during closure of the lamina; in fact, due to surface tension, during the lamina closure step, i.e. during the translatory motion of the lamina with respect to the port, the drops of color naturally tend to become arranged toward the port, without contacting the lamina, and in the course of time, a single very small drop consequently tends to form and becomes arranged on the lamina at the region affected by the vertex of the port 3.

Furthermore, in order to prevent the drop from accidentally separating, the lamina is not arranged perpendicular with respect to the axis of the port but is inclined so as to form an acute angle with respect to the axis of the duct, so that the port, which is on the same plane of contact with the lamina, has its vertex end arranged at a lower level than the remaining part of the port itself.

This causes the drops which possibly form to tend, as well as to move toward the port, i.e. toward the central region, also to remain toward the free end of the lamina, where the delivery of color pigment occurs with the valve in an open position.

Once closure has been performed, the free end of the lamina or front end, indicated by 11a, is arranged in cleaning members or lips, generally indicated by the reference numeral 20 in the drawing, so that the drop is removed without causing risks of contamination or the like.

To the above it should also be added that a drip hole, indicated by 30, is provided next to the port 3 at the vertex 3b and is controlled by a rod shutter 31 which allows to perform drop-by-drop delivery so as to achieve precise metering.

From what has been described above it can thus be seen that the invention achieves the proposed aim and objects and in particular the fact is stressed that the metering valve according to the invention, both by having a lamina which moves on an inclined plane, consequently having a port arranged on an inclined plane, and by virtue of the particular configuration of said port, allows first of all to have an extremely precise metering and secondly to radically solve the problem of color dripping at the closing shutter.

The invention thus conceived is susceptible to numerous modifications and variations, all of which are within the scope of the inventive concept.

All the details may furthermore be replaced with other technically equivalent elements.

In practice, the materials employed, so long as compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Metering valve for the metered delivery of color pigments particularly in apparatuses for mixing coloring substances, characterized in that it comprises a color pigment feed duct defining a delivery port controlled by a laminar shutter which is transversely movable with respect to said port, said port having, on the plane of contact with said laminar shutter, a configuration which tapers, in the direction of translation of said laminar shutter, toward the end of said port which is last-closed by said laminar shutter.

2. Metering valve, characterized in that it comprises a color pigment feed duct defining a delivery port which is controlled by a laminar shutter and transversely movable with respect to said port, said port and said laminar shutter having a plane of arrangement which is inclined with respect to a vertical plane, the end of said port which is last-closed by said laminar shutter being arranged at a lower level.

3. Metering valve, characterized in that it comprises a color pigment feed duct defining a delivery port controlled by a laminar shutter which can move transversely with respect to said port, said port having, on the plane of contact with said laminar shutter, a configuration which tapers, in the direction of translation of said laminar shutter, toward the end of said port which is last-closed by said laminar shutter, said laminar shutter and said port being arranged on a plane which is inclined with respect to a vertical plane with said last-closed end arranged at a lower level with respect to the remaining part of said port.

4. Metering valve, according to one or more of the preceding claims, characterized in that said port has a triangular configuration with the vertex arranged toward said last-closed end.

5. Metering valve, according to one or more of the preceding claims, characterized in that said laminar shutter has a closure lamina supported by a pair of lateral shoulders which are slidably guided by a fixed abutment rigidly associated with said feed duct.

6. Metering valve, according to one or more of the preceding claims, characterized in that said fixed abutment is slidably accommodated in guiding grooves defined by said guiding sides.

7. Metering valve, according to one or more of the preceding claims, characterized in that it comprises elastic means for elastically pressing said closure lamina against said port.

8. Metering valve, according to one or more of the preceding claims, characterized in that said elastic means are constituted by compression springs, accommodated in recesses defined by said side shoulders and acting on balls which abut on said fixed abutment.

9. Metering valve, according to one or more of the preceding claims, characterized in that it comprises, proximate to said port, a color pigment drip hole controlled by a rod shutter.

10. Metering valve, according to one or more of the preceding claims, characterized in that it comprises members which engage the free end of said closure lamina when said shutter is in a closed position to remove drops of color pigments.

Fig.4

Fig.5

Fig.1

Fig.2

Fig.3